# EUROPÄISCHE PATENTSCHRIFT

(11) **EP 2 051 792 B1**
(45) Veröffentlichungstag und Bekanntmachung des Hinweises auf die Patenterteilung: **03.09.2014**
(21) Anmeldenummer: 07787683.7
(22) Anmeldetag: 18.07.2007
(51) Int. Cl.: B01D 35/147

(54) **FILTERELEMENT, INSBESONDERE ZUR FILTRIERUNG VON FLÜSSIGKEITEN ODER GASEN**
FILTER ELEMENT, PARTICULARLY FOR FILTERING LIQUIDS OR GAS
ÉLÉMENT FILTRE, EN PARTICULIER POUR LE FILTRAGE DE LIQUIDES OU DE GAZ

(30) Priorität: 14.08.2006 DE 102006038100
(43) Veröffentlichungstag der Anmeldung: 29.04.2009
(73) Patentinhaber: Mann + Hummel GmbH, 71638 Ludwigsburg (DE)
(72) Erfinder: SCHRECKENBERGER, Dieter, 71672 Marbach (DE); PFLÜGER, Frank, 74343 Sachsenheim (DE)
(86) Internationale Anmeldenummer: PCT/EP2007/057424
(87) Internationale Veröffentlichungsnummer: WO 2008/019921

(56) Entgegenhaltungen:
- DE-A1- 19 546 440
- DE-A1- 19 605 425
- DE-A1- 19 809 989
- DE-A1- 19 839 190
- JP-A- 8 294 604

## Beschreibung

### Technisches Gebiet

Die Erfindung betrifft ein Filterelement, insbesondere zur Filtrierung von Flüssigkeiten oder Gasen, z. B. zur Filtrierung von Öl für eine Brennkraftmaschine mit einem Umgehungsventil für die zu filtrierende Flüssigkeit nach dem Oberbegriff des Patentanspruches 1. Außerdem betrifft die Erfindung eine Filtereinrichtung mit einem solchen Filterelement und ein Verfahren zur Wartung einer solchen Filtereinrichtung.

### Stand der Technik

Es ist bekannt, bei Flüssigkeitsfiltern mit zylindrischen Filtereinsätzen das Umgehungsventil im Bereich einer der stirnseitigen Endscheiben unterzubringen. Dieses wird zur Sicherung des Fluidflusses im Fall eines unzulässigen Ansteigens des Durchflusswiderstandes am Filterelement vorgesehen. Durch Öffnen des Umgehungsventils wird in diesem Falle eine Versorgung eines Systems mit Flüssigkeit oder Gasen gewährleistet.

Ein Flüssigkeitsfilter mit Umgehungsventil ist zum Beispiel in der DE 196 05 425 C2 offenbart. Die Figur 2 des genannten Dokumentes zeigt einen Flüssigkeitsfilter in demontiertem Zustand. Im Gehäuse ist ein Stützdom vorgesehen, an dem ein durch eine Feder vorgespannter Ventilkörper befestigt ist. Dieser findet in eingebautem Zustand des Filterelementes einen Ventilsitz in der zum Filterelement zugehörigen Endscheibe. Dadurch ist ein kostengünstiger Aufbau des Umgehungsventils gegeben. Bei einem Wechsel des Filterelementes wird jedoch nur der Ventilsitz mitsamt dem Filterelement gewechselt. Der Ventilkörper verbleibt im Stützdom, der gehäusefest ausgeführt ist. Daher ist der Ventilkörper im Verlauf des Gebrauches des Filters einem Verschleiß sowie einer Verschmutzung ausgesetzt. Insbesondere bei modernen Dieselmotoren kann der Ventilkörper seine Dichtheit durch Anlagerung von Partikeln verlieren, so dass am Umgehungsventil ein unerwünschter und ungefilterter Nebenstrom des Schmieröls entsteht. Hierdurch wird die Qualität des Schmieröls verschlechtert, wodurch entweder die Funktion der Brennkraftmaschine gefährdet wird oder häufigere Ölwechselintervalle notwendig werden. Um eine Fehlfunktion zu vermeiden, könnte der Ventilkörper ebenfalls bei jedem Filterwechsel ausgewechselt werden. Dies erzeugt jedoch einen erhöhten Montageaufwand und schafft Fehlerquellen, weil ein Auswechseln des Ventilkörpers durch den Monteur vergessen werden könnte. Aus der DE 195 46 440 A1 ist eine Filtervorrichtung bekannt, bei welcher das Filterelement im Wesentlichen einstückig mit einem ringförmigen Flansch und damit mit einem Bypassventil verbunden ist. Des Weiteren ist aus der DE 198 39 190 A1 ein Filterelement mit den Merkmalen des Oberbegriffs von Anspruch 1 bekannt.

Ausgehend von dem gattungsgemäßen Stand der Technik nach DE 198 39 190 A1 ist es die Aufgabe der Erfindung, ein Filterelement und eine Filtereinrichtung zu schaffen, welche eine hohe Qualität des das Umgehungsventil passierenden Fluids gewährleisten. Diese Aufgabe wird durch die Merkmale des Patentanspruches 1 bzw. durch eine Filtereinrichtung gemäß Anspruch 11 gelöst.

### Offenbarung der Erfindung

Das erfindungsgemäße Filterelement weist ein Filtermedium, beispielsweise ein Filtervlies oder -papier auf, das konzentrisch angeordnet und an den Stirnseiten mit Stirnendscheiben versehen ist, wobei eine der Stirnendscheiben ein Ventilelement aufweist. Das Ventilelement besteht aus einem Ventilsitz und einem Ventilteller, der axial verschiebbar ist und durch eine Führung in seiner axialen Bewegung begrenzt wird. Bei einem Wechseln des Filterelementes wird dieses Ventil mit ausgewechselt. Dadurch kann sichergestellt werden, dass der Filter zuverlässig arbeitet. Im Sinne der Erfindung wölbt sich der Ventilsitz über die Ebene der äußeren Seite der Endscheibe nach außen. Der Bildung von Ablagerungen an dem Umgehungsventil aus stehendem, ungefilterten Fluid, welche bei geöffnetem Umgehungsventil mitgerissen werden könnten, wird dadurch entgegengewirkt.

### Kurze Beschreibung der Zeichnungen

Die Erfindung wird nachfolgend anhand von Ausführungsbeispielen näher erläutert. Es zeigt:
- Figur 1: einen Halbschnitt durch ein Filterelement,
- Figur 2: eine perspektivische Ansicht einer ersten Stirnendscheibe von oben,
- Figur 3: eine perspektivische Ansicht einer ersten Stirnendscheibe von unten, und
- Figur 4: eine Schnittdarstellung durch einen Flüssigkeitsfilter mit einem darin angeordneten Filterelement.

### Ausführungsform(en) der Erfindung

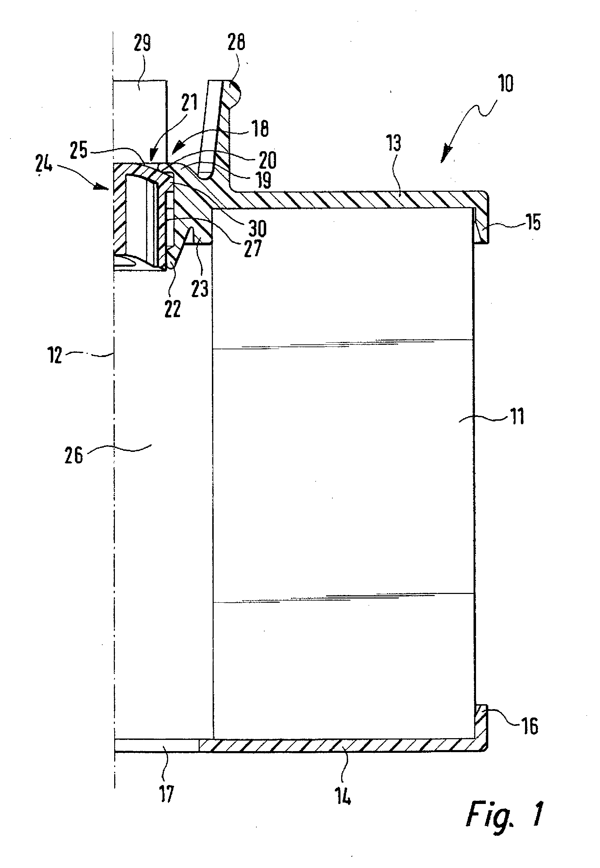

Der Halbschnitt in Figur 1 zeigt ein Filterelement 10. Dieses besteht aus einem zickzackförmig gefalteten Filtermedium 11, das konzentrisch um die Mittelachse 12 angeordnet ist. Das Filtermedium wird an seinen Stirnseiten durch eine erste Stirnendscheibe 13 und eine zweite Stirnendscheibe 14 begrenzt. Die Stirnendscheiben sorgen für einen dichten Abschluss und sind mit dem Filtermedium 11 verklebt oder aufgrund eines Schweißvorganges - sofern es sich bei den Stirnendscheiben um thermoplastische Kunststoffendscheiben und bei dem Filtermedium um thermoplastisches Material handelt - mit dem Filtermedium 11 verbunden. Die Endscheiben weisen jeweils einen äußeren Flansch 15, 16 auf zur konzentrischen Positionierung des Filtermediums 11. Während die Stirnendscheibe 14 im Wesentlichen plan ausgebildet ist und in ihrem inneren Bereich eine Öffnung 17 zur Aufnahme eines Anschlussstutzens aufweist, ist die erste Stirnendscheibe 13 als Funktionsbauteil ausgestaltet und gleichzeitig Träger eines Ventils 18. Dieses Ventil 18 besteht aus folgenden Komponenten:
Zunächst ist die erste Stirnendscheibe 13 mit einer Aufwölbung 19 versehen. Diese Aufwölbung 19 bildet in ihrem inneren Bereich einen Ventilsitz 20. Innerhalb des Ventilsitzes befindet sich eine Ventilöffnung 21, durch die - sofern das Ventil offen ist - Flüssigkeit oder Gas einströmen kann.
Das Ventil 18 ist ferner mit Führungsstegen 22 versehen, von denen hier lediglich ein Führungssteg zu erkennen ist. Im Bereich des Führungssteges 22 ist ein Kontaktstift 23 vorgesehen, dieser wird weiter unten näher erläutert. Durch die Führungsstege gehalten und axial nach oben durch den Ventilsitz 20 begrenzt befindet sich im Inneren der ersten Stirnendscheibe 13 ein Ventiltellerteil oder Schiebeventil 24. Dieses Schiebeventil 24 besitzt eine Ventiltelleroberfläche 25, die mit dem Ventilsitz 20 zusammenwirkt und in der gezeigten Stellung für eine Abdichtung des Innenraumes 26 innerhalb des Filtermediums 11 sorgt. Das Ventiltellerteil 24 weist eine zylindrische Oberfläche 27 auf und kann sich axial nach unten bewegen. Die axiale Bewegung wird durch die Führungsstege 22 an der Oberfläche 27 geführt.

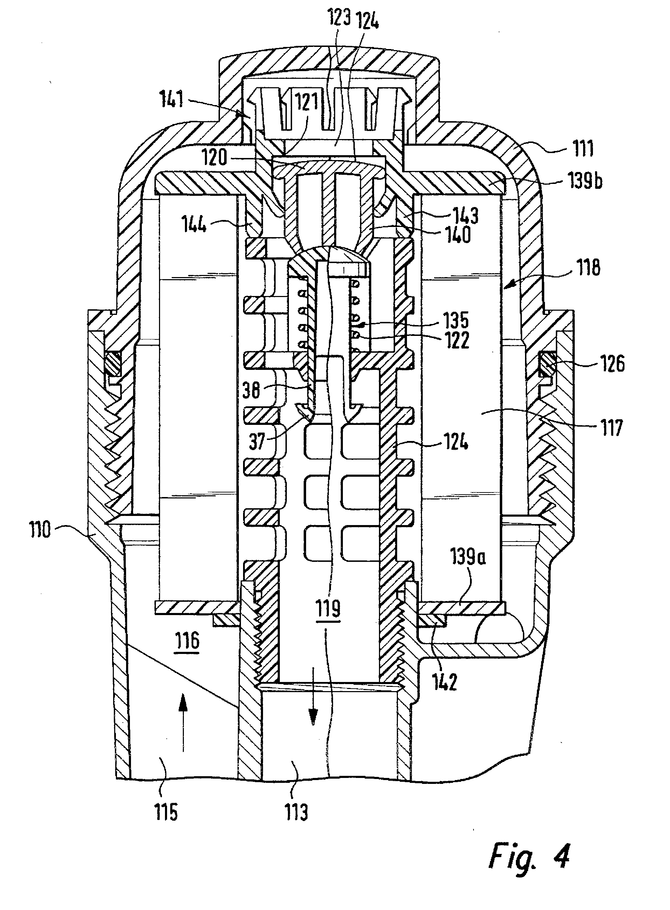

Die Offenstellung des Ventils wird in Figur 4 gezeigt. An der ersten Stirnendscheibe 13 sind ferner Rastelemente 28, 29 vorgesehen, die - wie in Figur 4 gezeigt - mit einem Gehäusedeckel zusammenwirken.

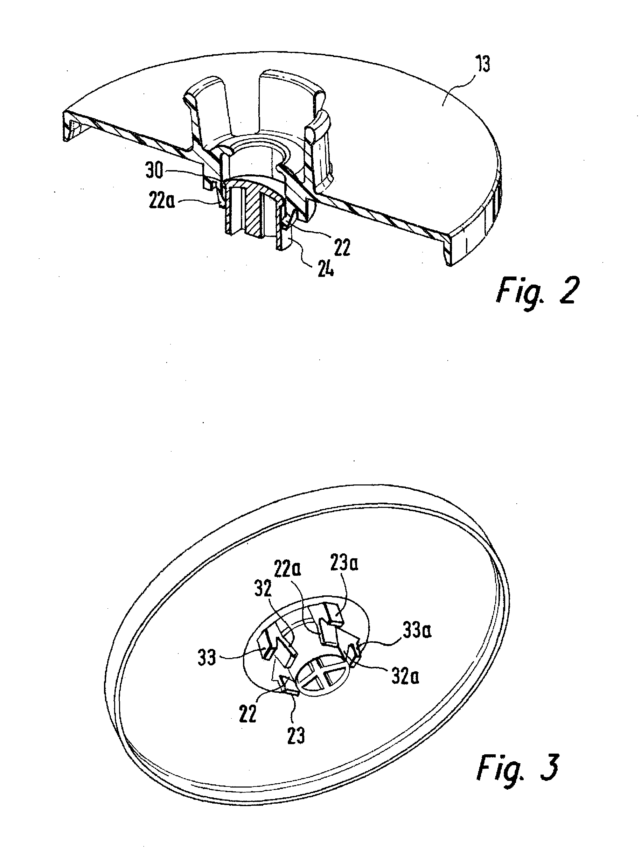

Figur 2 zeigt die erste Stirnendscheibe 13 in einer perspektivischen Darstellung ohne das Filtermedium 11. Gleiche Teile sind mit gleichen Bezugszeichen versehen. Das Ventiltellerteil 24 ist in der axial unteren Endlage dargestellt, das Ventil ist somit geöffnet. Es ist zu erkennen, dass sich die Führungsstege 22 und 22a gegenüberliegen, es sind weitere um 90° zu den gezeigten Führungsstegen versetzt angeordnete Führungsstege vorgesehen, so dass das Ventiltellerteil 24 zuverlässig geführt wird. Im Bereich der Ventiltelleroberfläche befindet sich ein Stützrand 30, der ebenfalls für eine Abstützung des Ventiltellertellerteils 24 sorgt.

Die Ansicht gemäß Figur 3 zeigt die Führungsstege 22, 22a und 32, 32a. Ferner zeigt diese Darstellung die im Bereich der Führungsstege angeordneten Kontaktstifte 23, 23a, 33, 33a, deren Wirkungsweise weiter unten beschrieben ist. Sowohl die Stirnendscheibe 13 als auch das Ventiltellerteil 24 besteht aus thermoplastischem Kunststoff. Das Ventiltellerteil 24 wird bei der Montage lediglich in die Stirnendscheibe eingerastet.

Der Flüssigkeitsfilter gemäß Figur 4 weist ein Filterelement ähnlich dem in Figur 1 gezeigten auf und wird nachfolgend näher erläutert. Zunächst ist ein Sockel 110 vorgesehen sowie ein Schraubdeckel 111. Im Bereich des Sockels sind ein Auslass 113 sowie ein Einlass 115 angeordnet. Die zu filternde Flüssigkeit strömt durch den Einlass 115 in eine Rohflüssigkeitsseite 116 des Filters, durchtritt von dort das Filtermedium 117 eines Filtereinsatzes 118, gelangt so in einen Innenraum 119 des Filtereinsatzes, der die Reinseite des Filters darstellt und strömt durch den Auslass 113 aus dem Filter hinaus. Bei Überschreiten eines bestimmten Druckunterschiedes am Filterelement öffnet ein Umgehungsventil - bestehend aus einem Filterkörper 120, einem Ventilsitz 121 und einer Feder 122, die den Ventilkörper auf den Ventilsitz drückt - , wodurch die Flüssigkeit durch Umgehungsöffnungen 123 strömt und so auf direktem Weg von der Rohflüssigkeitsseite 116 in den Innenraum 119 des Filtereinsatzes 118 gelangt. Im Sockel 110 fest montiert befindet sich ein Stützdom 124, in dem einerseits die Feder 122 montiert ist und andererseits zur Abstützung des Filtermediums 117 dient. Auf diesen Stützdom kann bei der Montage der Filtereinsatz 118 aufgeschoben werden, in den der Ventilkörper 120 und der Ventilsitz 121 integriert sind. Anschließend wird der Schraubdeckel 111 in den Sockel 110 eingeschraubt, wobei eine Abdichtung durch eine Formdichtung 126 zwischen Sockel und Schraubdeckel erfolgt. An der Feder 122 ist ein Zwischenstück 135 vorgesehen, so dass die Federkraft der Druckfeder 122 auf Rippen 140 des Ventilelementes 120 eine axial gerichtete Kraft ausübt. Der Ventilkörper 120 weist mit seiner Ventiltelleroberfläche 124 in der hier gezeigten Stellung einen Abstand zu dem Ventilsitz 121 auf. Damit gelangt - wie in Figur 2 gezeigt - Flüssigkeit zwischen den Haltestegen von der Rohflüssigkeitsseite auf die Reinflüssigkeitsseite. Diese Stellung der Ventiltelleroberfläche 124 wird nur dann eingenommen, wenn der Flüssigkeitsdruck auf der Rohflüssigkeitsseite wesentlich über dem Flüssigkeitsdruck auf der Reinflüssigkeitsseite liegt. Der Filtereinsatz 118 ist stirnseitig mit Endscheiben 139a, 139b abgedichtet. An der Endscheibe 139a ist eine Radialdichtung 142 vorgesehen, die für eine Abdichtung in diesem Bereich zwischen Rohflüssigkeits- und Reinflüssigkeitsseite sorgt. An der Endscheibe 139b ist eine Rastverbindung 141 zur Fixierung des Filtereinsatzes 118 beim Aufschrauben des Filters im Schraubdeckel 111 vorgesehen. An der Endscheibe 139b sind ferner Kontaktstifte 143, 144 angeordnet, diese sind im Eingriff mit dem Stützdom 124 oder Funktionselemente am Stützdom 124. So werden durch diese Kontaktstifte der Stützdom oder Teile des Stützdomes in einer vordefinierten axialen Position gehalten. Außerdem können diese Kontaktstifte Funktionsbauteile am Stützdom, wie z. B. Verriegelungssysteme, lösen. Die entscheidende Funktion dieser Kontaktstifte liegt darin, dass ein funktionssicheres Zusammenwirken zwischen Stützdom 124, Filtereinsatz 118, Schraubdeckel 111 und Sockel 110 erfolgt.

## Patentansprüche

1. Filterelement (10), insbesondere zur Filtrierung von Flüssigkeiten oder Gasen mit einem konzentrisch angeordneten, zickzackförmig gefalteten Filtermedium (11), wobei das Filtermedium (11) an den Stirnseiten mit Stirnendscheiben (13, 14) versehen ist, mit einer inneren Seite, die mit dem Filtermedium (11) verbunden ist, und einer äußeren Seite, die dem Filterelement (10) abgewandt ist, und wobei wenigstens eine erste Stirnendscheibe (13) ein Ventilelement (18) aufweist, welches konzentrisch innerhalb des Filtermediums (11) angeordnet ist und wobei das Ventilelement (18) einen mit einem Ventilsitz (20) zusammenwirkenden Ventilteller (24) aufweist, der innerhalb und umgeben von dem Filtermedium (11) axial beweglich an der ersten Endscheibe (13) angeordnet ist, **dadurch gekennzeichnet, dass** dieses Ventilelement (18) aus einem Ventilsitz (20) besteht, der sich über die Ebene der äußeren Seite der Endscheibe (13) nach außen wölbt.

2. Filterelement nach Anspruch 1, **dadurch gekennzeichnet, dass** an der ersten Stirnendscheibe (13) von der Innenseite derselben ausgehend, insbesondere federwirksame Führungsstege (22, 22a) vorgesehen sind.

3. Filterelement nach Anspruch 2, **dadurch gekennzeichnet, dass** wenigstens drei Führungsstege (22, 22a) vorgesehen sind.

4. Filterelement nach einem der Ansprüche 2 oder 3, **dadurch gekennzeichnet, dass** an der inneren Seite der ersten Endscheibe (13) im Bereich der Führungsstege (22, 22a) Kontaktstifte (23, 23a, 33, 33a) vorgesehen sind, die sich in Richtung der gegenüberliegenden Endscheibe (14) erstrecken.

5. Filterelement nach einem der Ansprüche 2 bis 4, **dadurch gekennzeichnet, dass** der Ventilteller (24) eine zylindrische oder kegelförmige Oberfläche (27) aufweist und an den Stegen (22, 22a) axial gleitend geführt ist.

6. Filterelement nach einem der vorherigen Ansprüche, **dadurch gekennzeichnet, dass** eine Stirnendscheibe (13) an der Außenfläche Rastnasen (28, 29) zum Verbinden mit weiteren Bauteilen aufweist.

7. Filterelement nach einem der vorherigen Ansprüche, **dadurch gekennzeichnet, dass** die dem Ventilsitz (20) entgegengewandte Seite des Ventiltellers (24) axial verlaufende Einkerbungen aufweist.

8. Filterelement nach einem der Ansprüche 2 bis 7, **dadurch gekennzeichnet, dass** der Ventilteller (24) in Verbindung mit den Stegen (22, 22a) einen Axialanschlag aufweist.

9. Filterelement nach Anspruch 2, **dadurch gekennzeichnet, dass** der Axialanschlag aus einem ringförmigen Wulst am Ventilteller (24) und konzentrisch nach innen gerichteten Nasen an den Stegen (22, 22a) besteht.

10. Filterelement nach Anspruch 8, **dadurch gekennzeichnet, dass** der Ventilteller (24) und die Endscheiben (13, 14) aus einem Elastomer bestehen.

11. Filtereinrichtung mit einem Gehäuse, einem mit dem Gehäuse verbundenen Mittelrohr, eine Öffnung für das zu filternde Fluid oder Gas und eine Öffnung für das gereinigte Fluid oder Gas, wobei die Entnahme des gereinigten Fluids oder Gases durch das Mittelrohr erfolgt, einem im Wesentlichen metallfreien Filterelement (10) nach Anspruch 1.

12. Verfahren zur Wartung einer Filtereinrichtung nach Anspruch 11, wobei das Filterelement (10) der Filtereinrichtung Kontaktstifte (23, 23a, 33, 33a) aufweist, und wobei der Deckel des Gehäuses abgenommen wird, das Filterelement (10) von dem Stützrohr abgezogen wird, wobei der Ventilteller (24) an dem Filterelement (10) verbleibt und in Kontakt mit dem Ventilsitz (20) ist und wobei anschließend ein neues Filterelement (10) auf das Stützrohr aufgeschoben wird und der Ventilteller (24) mit seiner dem Ventilsitz (20) gegenüberliegenden Fläche an einem Stützrohr zur Anlage kommt und die Kontaktstifte (23, 23a, 33, 33a) an dem Filterelement (10) in Öffnungen oder an Anlageflächen des Stützrohres eingreifen oder anliegen.

## Claims

1. Filter element (10), in particular for filtering liquids or gases with a concentrically disposed, zigzag-folded filter medium (11), wherein the filter medium (11) is provided with end face disks (13, 14) at the front faces, with an inner side connected with the filter medium (11) and an outer side facing away from the filter element (10), and wherein at least one first end face disk (13) features a valve element (18), which is concentrically disposed inside of the filter medium (11) and wherein the valve element (18) features a valve disc (24) interacting with a valve seat (20) and which is disposed inside and surrounded by the filter medium (11) axially movable at the first end disk (13), **characterized in that** this valve element (18) consists of a valve seat (20) curved outwards across the plane of the outer side of the end disk (13).

2. Filter element according to claim 1, **characterized in that** in particular spring-effective guiding webs (22, 22a) are provided at the first end face disk (13) extending from the interior side of said disk.

3. Filter element according to claim 2, **characterized in that** at least three guiding webs (22, 22a) are provided.

4. Filter element according to one of the claims 2 or 3, **characterized in that** contact pins (23, 23a, 33, 33a), which extend in the direction of the opposing end disk (14), are provided on the inner side of the first end disk (13) in the area of the guiding webs (22, 22a).

5. Filter element according to one of the claims 2 to 4, **characterized in that** the valve disc (24) features a cylindrical or conical surface (27) and that it is axially gliding on the webs (22, 22a).

6. Filter element according to one of the above claims, **characterized in that** an end face disk (13) features locking catches (28, 29) at the outside surface for connection with further components.

7. Filter element according to one of the above claims, **characterized in that** the side of the valve disc (24) facing the valve seat (20) features axially extending indentations.

8. Filter element according to one of the claims 2 to 7, **characterized in that** the valve disc (24) features in connection with the webs (22, 22a) an axial stop.

9. Filter element according to claim 2, **characterized in that** the axial stop consists of an annular bead at the valve disc (24) and concentrically inwardly directed lugs at the webs (22, 22a).

10. Filter element according to claim 8, **characterized in that** the valve disc (24) and the end disks (13, 14) are made of an elastomer.

11. Filtering device with a housing, a central tube connected with the housing, an opening for the fluid or gas to be filtered and an opening for the purified fluid or gas, wherein the discharge of the purified fluid or gas is realized through the central tube, a substantially metal-free filter element (10) according to claim 1.

12. Method for the maintenance of a filtering device according to claim 11, wherein the filter element (10) of the filtering device features contact pins (23, 23a, 33, 33a), and wherein the cover of the housing is removed, the filter element (10) removed from the support tube, wherein the valve disc (24) remains at the filter element (10) and is in contact with the valve seat (20) and wherein subsequently a new filter element (10) is slid onto the support tube and the valve disc (24) contacts a support tube with its surface opposing the valve seat (20) and the contact pins (23, 23a, 33, 33a) on the filter element (10) engage in openings or abut on contact areas of the support tube.

## Revendications

1. Élément filtrant (10), notamment pour le filtrage de liquides ou de gaz, avec un milieu filtrant (11) disposé de manière concentrique et plié en accordéon, le milieu filtrant (11) étant pourvu sur ses faces frontales de disques d'extrémité frontaux (13, 14) avec une face intérieure qui est reliée au milieu filtrant (11), et avec une face extérieure qui est orientée à l'opposé de l'élément filtrant (10), et au moins un premier disque d'extrémité frontal (13) comportant un élément de soupape (18) qui est disposé de manière concentrique à l'intérieur du milieu filtrant (11), et l'élément de soupape (18) étant doté d'une tête de soupape (24) interagissant avec un siège de soupape (20) et étant disposée, entourée du milieu filtrant (11), de façon mobile en sens axial sur le premier disque d'extrémité (13), **caractérisé en ce que** cet élément de soupape (18) se compose d'un siège de soupape (20) qui est bombé vers l'extérieur au-dessus du plan de la face extérieure du disque d'extrémité (13).

2. Élément filtrant selon la revendication 1, **caractérisé en ce que** des nervures de guidage (22, 22a) en particulier élastiques sont prévues sur le premier disque d'extrémité frontal (13), à partir de la face intérieure dudit disque.

3. Élément filtrant selon la revendication 2, **caractérisé en ce qu'**au moins trois nervures de guidage (22, 22a) sont prévues.

4. Élément filtrant selon l'une des revendications 2 ou 3, **caractérisé en ce que** des broches de contact (23, 23a, 33, 33a) sont prévues sur la face intérieure du premier disque d'extrémité (13), dans la zone des nervures de guidage (22, 22a), qui s'étendent en direction du disque d'extrémité opposé (14).

5. Élément filtrant selon l'une des revendications 2 à 4, **caractérisé en ce que** la tête de soupape (24) présente une surface cylindrique ou conique (27) et glisse en sens axial sur les nervures (22, 22a).

6. Élément filtrant selon l'une des revendications précédentes, **caractérisé en ce qu'**un disque d'extrémité frontal (13) est pourvu, sur sa face extérieure, d'ergots d'encliquetage (28, 29) permettant un assemblage avec d'autres composants.

7. Élément filtrant selon l'une des revendications précédentes, **caractérisé en ce que** le côté de la tête de soupape (24) orienté à l'opposé du siège de soupape (20) est pourvu de rainures axiales.

8. Élément filtrant selon l'une des revendications 2 à 7, **caractérisé en ce que** la tête de soupape (24), en relation avec les nervures (22, 22a), est dotée d'une butée axiale.

9. Élément filtrant selon la revendication 2, **caractérisé en ce que** la butée axiale se compose d'un bourrelet annulaire situé sur la tête de soupape (24) et d'ergots dirigés de manière concentrique vers l'intérieur sur les nervures (22, 22a).

10. Élément filtrant selon la revendication 8, **caractérisé en ce que** la tête de soupape (24) et les disques d'extrémité (13, 14) sont constituées d'un élastomère.

11. Dispositif de filtration avec un boîtier, un tube médian relié au boîtier, une ouverture pour le fluide ou le gaz à filtrer et une ouverture pour le fluide ou le gaz purifié, le prélèvement du fluide ou gaz purifié s'opérant au moyen du tube médian, un élément filtrant (10) essentiellement exempt de métal selon la revendication 1.

12. Procédé d'entretien d'un dispositif de filtration selon la revendication 11, selon lequel l'élément filtrant (10) du dispositif de filtration est pourvu de broches de contact (23, 23a, 33, 33a), et selon lequel le couvercle du boîtier est retiré, l'élément filtrant (10) est enlevé du tube de soutien, la tête de soupape (24) reste sur l'élément filtrant (10) et se trouve en contact sur le siège de soupape (20) et, ensuite, un nouveau élément filtrant (10) est glissé sur le tube de soutien et la tête de soupape (24) vient s'appliquer, avec sa face orientée à l'opposé du siège de soupape (20), sur un tube de soutien et les broches de contact (23, 23a, 33, 33a) de l'élément filtrant (10) se mettent en prise dans des ouvertures ou en contact sur des surfaces de contact du tube de soutien.
